# EUROPÄISCHE PATENTSCHRIFT

(11) **EP 2 279 400 B1**
(45) Veröffentlichungstag und Bekanntmachung des Hinweises auf die Patenterteilung: **27.02.2013**
(21) Anmeldenummer: 09737517.4
(22) Anmeldetag: 28.04.2009
(51) Int. Cl.: G01M 3/00, G01M 3/28, G01M 3/32

(54) **LECKWARNANLAGE FÜR DOPPELWANDIGE FLUIDLEITUNGEN ODER TANKS**
LEAK WARNING SYSTEM FOR DOUBLE-WALLED FLUID LINES OR TANKS
DÉTECTEUR DE FUITES POUR DES CONDUITES DE FLUIDES OU DES RÉSERVOIRS À DOUBLE PAROI

(30) Priorität: 30.04.2008 AT 6792008
(43) Veröffentlichungstag der Anmeldung: 02.02.2011
(73) Patentinhaber: Wolftank Systems AG, 39100 Bozen (IT)
(72) Erfinder: KREIL, Ander, A-6020 Innsbruck (AT); WERTH, Peter, A-6162 Mutters (AT)
(74) Vertreter: Weiser, Andreas
(86) Internationale Anmeldenummer: PCT/AT2009/000169
(87) Internationale Veröffentlichungsnummer: WO 2009/132365

(56) Entgegenhaltungen:
- US-A- 5 081 864
- US-A- 5 400 646
- US-A- 6 032 699

## Beschreibung

Die vorliegende Erfindung betrifft eine Leckwarnanlage für doppelwandige Fluidleitungen oder Tanks, insbesondere von Tankstellen, mit einem Druckfluidvorrat zum Beaufschlagen des Zwischenraums der Doppelwand mit Druckfluid und mit einem Drucksensor zum Messen des Zwischenraumdrucks für Leckwarnungszwecke, wobei die Leckwarnanlage einen zweiten Drucksensor zum Messen des Innendrucks der Fluidleitung bzw. des Tanks, ein steuerbares Ventil zwischen Druckfluidvorrat und Zwischenraum sowie eine an die Drucksensoren angeschlossene Regeleinrichtung zur Ansteuerung des Ventils mit dem Regelungsziel, den Zwischenraumdruck um eine Mindest-Druckdifferenz über dem Innendruck zu halten, aufweist.

Eine derartige Leckwarnanlage ist z.B. aus der US 6 032 699 A bekannt. Die bekannten Einrichtungen zur Aufrechterhaltung einer Mindest-Druckdifferenz zwischen Doppelwand-Zwischenraum und Leitungsinnerem versagen bei einem Absinken des Vorratsdrucks, was zu gefährlichen Betriebszuständen führen kann.

Die Erfindung setzt sich zum Ziel, eine Leckwarnanlage der genannten Art so weiterzubilden, daß sie unter allen Betriebsbedingungen eine sichere Leckwarnung ermöglicht und das Austreten von Fluiden aus den Leitungen bzw. Tanks verhindert. Dieses Ziel wird mit einer Leckwarnanlage der einleitend genannten Art erreicht, die sich gemäß der Erfindung dadurch auszeichnet, daß sie einen dritten Drucksensor zum Messen des Vorratsdrucks im Druckfluidvorrat und eine daran angeschlossene Auswerteeinrichtung aufweist, welche aus der Abnahmerate des Vorratsdrucks jenen Zeitpunkt extrapoliert, zu dem der Vorratsdruck einen vorgegebenen Schwellwert unterschreiten wird.

Auf diese Weise wird ein selbsteinstellender Lecksensor geschaffen, der anstelle eines festen Schwellwertes ein vorgegebenes Mindest-Druckgefälle zwischen Doppelwand-Zwischenraum und Leitungsinnerem überwacht. Durch den Einsatz eines steuerbaren Ventils wird dabei der Druck im Druckfluidvorrat vom Druck im Doppelwand-Zwischenraum entkoppelt, so daß mit Hilfe des dritten Drucksensors der Vorratsdruck im Hinblick auf die jeweils aktuell verbleibende Restfunktionszeit der Leckwarnanlage überwacht werden kann. Dadurch können präemptiv Maßnahmen getroffen werden, um eine ununterbrochene Funktionsfähigkeit aufrechtzuerhalten. Der Druckfluidvorrat wird in der Regel in Form von Gasflaschen aufgebaut, und mit Hilfe der Erfindung können so die Dringlichkeit eines Gasflaschentauschs ermittelt und die Zeitpunkte des Gasflaschentauschs optimiert werden. Im Ergebnis wird eine Leckwarnanlage geschaffen, die strengen Sicherheitsanforderungen genügt, wie sie beispielsweise in dem aktuellen UNI-Standard Nr. 13160-2 für Leckdetektionssysteme vorgeschrieben sind.

Bevorzugt wird auch eine an die Drucksensoren angeschlossene Auswerteeinrichtung vorgesehen, welche eine Leckwarnung ausgibt, wenn die Druckdifferenz zwischen Zwischenraumdruck und Innendruck die Mindest-Druckdifferenz unterschreitet.

Eine besonders vorteilhafte Ausführungsform der Erfindung zeichnet sich dadurch aus, daß das Ausgangssignal des zweiten Drucksensors, bevorzugt auch jenes des ersten Drucksensors, vor der Auswertung einer zeitlichen Glättung unterliegt. Dadurch können der störende Einfluß von transienten Druckschwankungen, wie sie beispielsweise durch das Ein- oder Ausschalten einer Zapfpistole in der Fluidleitung hervorgerufen werden, auf das Auswerteergebnis minimiert und damit Fehlalarme verhindert werden.

Gemäß einem besonders bevorzugten Merkmal der Erfindung wird für die zeitliche Glättung eine Medianbildung über ein gleitendes Zeitfenster verwendet. Dies ergibt eine besonders robuste und störungsunanfällige Leckwarnung, da die Medianbildung die Eigenschaft hat, "Ausreißer"-Werte, wie sie beispielsweise durch transiente Druckspitzen verursacht werden, unberücksichtigt zu lassen.

Bevorzugt ist der genannte Schwellwert gleich der Summe aus dem maximal möglichen Innendruck der Fluidleitung und der Mindest-Druckdifferenz, um die Betriebssicherheit unter allen Umständen aufrechtzuerhalten.

Gemäß einer weiteren bevorzugten Ausführungsform der Erfindung ist die genannte Mindest-Druckdifferenz wenigstens 1 bar, wodurch die Vorschriften der Norm UNI 13160-2 sichergestellt werden können.

In jedem Fall ist es besonders günstig, wenn die Leckwarnanlage ein steuerbares Ablaßventil für den Zwischenraum aufweist, um daraus Druckfluid zu Testzwecken abzulassen. Dadurch kann jederzeit ein Test der Leckwarnanlage durchgeführt werden.

Bevorzugt weist die Leckwarnanlage ferner eine Sendeeinrichtung zum Senden der Leckwarnung, des Extrapolationszeitpunkts und/oder ihres Funktionsstatus an eine entfernte Zentrale auf, und in Verbindung mit einem steuerbaren Ablaufventil wird besonders bevorzugt vorgesehen, dass das Ablassventil von der Zentrale fernsteuerbar ist. Dadurch ist die Leckwarnanlage vollständig fernabfragbar und fernsteuerbar, was Begehungen vor Ort erübrigt.

Bevorzugt wird für den Betrieb der Leckwarnanlage ein Schutzgas verwendet, besonders bevorzugt Stickstoff, wie es in der Technik an sich bekannt ist.

Die Erfindung wird nachstehend anhand eines in den beigeschlossenen Zeichnungen dargestellten Ausführungsbeispieles näher erläutert. In den Zeichnungen zeigt
Fig. 1 die Anlage der Erfindung in Blockschaltbildform und
Fig. 2 ein Druck-Zeit-Diagramm zur Veranschaulichung der Extrapolation des Zeitpunkts der Erschöpfung des Druckfluidvorrats.

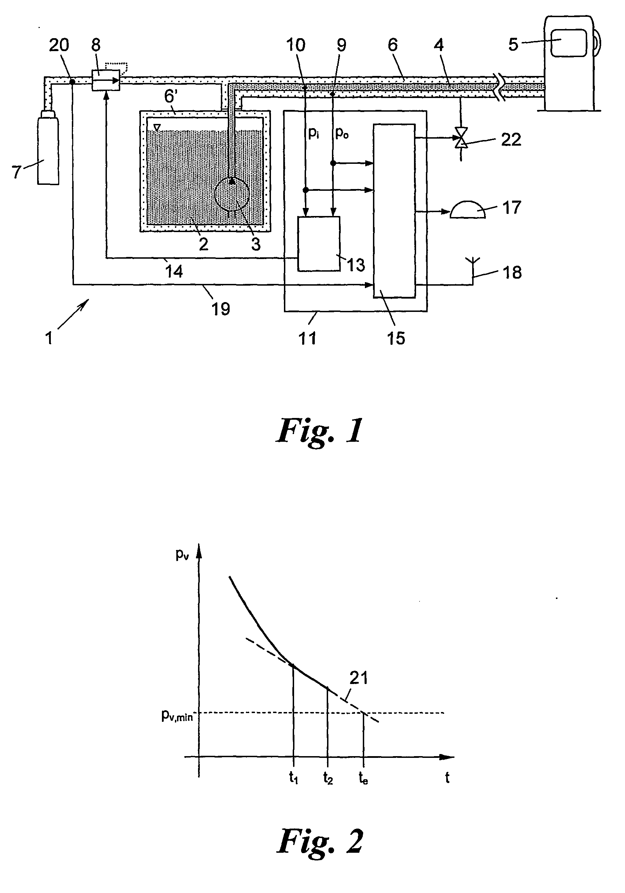

In Fig. 1 ist als Beispiel einer doppelwandigen Fluidleitungsinstallation eine Tankstelle 1 mit einem unterirdischen Tank 2 gezeigt, der über eine Druckpumpe 3 und eine Fluidleitung 4 eine Zapfsäule 5 speist. Sowohl der Tank 2 als auch die Fluidleitung 4 besitzen einen Doppelwandaufbau mit einem Zwischenraum 6 bzw. 6' zwischen den beiden Wänden der Doppelwand. Im weiteren wird die Leckwarnanlage für den Doppelwand-Zwischenraum 6 der Fluidleitung 4 im Detail beschrieben.

Die in Fig. 1 dargestellte Leckwarnanlage für die Fluidleitung 4 umfaßt einen Druckfluidvorrat 7, welcher über ein steuerbares Ventil 8 den Zwischenraum 6 mit Druckfluid beaufschlagt. Als Druckfluid kann ein beliebiges Gas oder eine beliebige Flüssigkeit verwendet werden; bevorzugt ist das Druckfluid ein Schutzgas, besonders bevorzugt Stickstoff (N₂).

Ein erster Drucksensor 9 mißt den Zwischenraumdruck pₒ im Zwischenraum 6, und ein zweiter Drucksensor 10 mißt den Innendruck pᵢ der Fluidleitung 4. Die Ausgänge der Drucksensoren 9, 10 sind an eine Regeleinrichtung 13 geführt, welche durch entsprechende Ansteuerung des Ventils 8 über eine Steuerleitung 14 als Regelungsziel stets danach trachtet, den Zwischenraumdruck pₒ um eine Mindest-Druckdifferenz p_{diff,min} über dem Innendruck pᵢ zu halten. Die Mindest-Druckdifferenz p_{diff,min} beträgt bevorzugt einige bar, besonders bevorzugt 1 bar.

Das steuerbare Ventil 8 kann von jeder in der Technik bekannten Art sein, beispielsweise ein Schaltventil, das für bestimmte vordefinierte Zeitabschnitte geöffnet wird, ein modulierbares Mengenregelventil, ein regelbares Druckminderventil, od.dgl.

Zur Detektion eines Lecks im Zwischenraum 6 wird überwacht, ob die durch die Komponenten 7 - 14 gebildete Regelung in der Lage ist, ebendiese Mindest-Druckdifferent p_{diff,min} im Betrieb stets aufrechtzuerhalten. Zu diesem Zweck sind die Ausgänge der Drucksensoren 9, 10 an eine Auswerteeinrichtung 15 geführt, welche überprüft, ob pₒ - pᵢ ≥ p_{diff,min} ist; wenn diese Bedingung nicht erfüllt ist, gibt die Auswerteeinrichtung 15 einen Leckalarm auf einer Alarmeinrichtung 17 aus, z.B. einer Sirene oder Signalleuchte. Optional kann der Leckalarm über eine Sendeeinrichtung 18 an eine entfernte Zentrale (nicht gezeigt) gesendet werden, zusammen mit anderen Statusmeldungen der Auswerteeinrichtung 15.

Ein- und Ausschaltvorgänge der Zapfsäule 5 können im praktischen Betrieb unter Umständen starke, transiente Druckschwankungen in der Fluidleitung 4 hervorrufen, welche zu einem vorübergehenden Unterschreiten der Mindest-Druckdifferenz und damit zu Fehlalarmen führen könnten. Um dies zu verhindern, werden die Ausgangssignale pₒ, pᵢ der Drucksensoren 9, 10 (oder auch ihre Differenz pₒ - pᵢ) bevorzugt zeitlich geglättet, beispielsweise durch Tiefpaßfilterung, Verwendung eines gleitenden Mittelwerts oder bevorzugt durch Verwendung eines Medians in einem zeitlich gleitenden Fenster.

Unter einem Median wird dabei jener Wert einer Gruppe von Werten (hier: der Abtastwerte innerhalb eines gleitenden Zeitfensters) verstanden, der - wenn die Werte der Gruppe nach Größe sortiert werden - in der Sortierreihenfolge in der Mitte steht.

Die Auswerteeinrichtung 15 kann den Zwischenraumdruck pₒ auch auf einen absoluten Mindestdruck p_{o,min} überwachen, welcher beispielsweise aus Betriebsgründen unter allen Umständen aufrechtzuerhalten ist, z.B. wegen erforderlichen Mindest-Druckhöhen für Steigleitungen usw., und dessen Unterschreiten ebenfalls einen Leckalarm auslöst.

Die Auswerteeinrichtung 15 empfängt über einen Signalweg 19 auch den Meßwert eines dritten Drucksensors 20, welcher den Druck pᵥ im Druckfluidvorrat 7 vor dem Ventil 8 mißt. Aus der zeitlichen Abnahmerate des vom dritten Drucksensor 20 gemessenen Vorratsdrucks pᵥ kann auf den Zeitpunkt der Erschöpfung des Druckfluidvorrats 7 geschlossen werden, wie nachstehend ausführlicher erläutert.

Fig. 2 zeigt ein Beispiel der zeitlichen Abnahme des vom dritten Drucksensor 20 gemessenen Drucks pᵥ des Druckfluidvorrats 7 von einem ersten Zeitpunkt t₁ zu einem zweiten Zeitpunkt t₂. Durch Extrapolation der Druckabnahme vom Zeitpunkt t₁ zum Zeitpunkt t₂, siehe Sekante 21, kann jener Zeitpunkt tₑ berechnet werden, zu dem der Druck pᵥ im Druckfluidvorrat 7 einen vorgegebenen Schwellwert p_{v,min} voraussichtlich unterschreiten wird. Wenn der Schwellwert p_{v,min} gleich der Summe aus maximal möglichen Innendruck p_{i,max} der Fluidleitung 4, z.B. 3,5 bar, und der genannten Mindestdruck-Differenz p_{diff,min} von Zwischenraumdruck pₒ und Innendruck pᵢ, z.B. 1 bar, festgesetzt wird, d.h. im genannten Beispiel z.B. auf 4,5 bar, und der Druckfluidvorrat 7 stets vor dem erwarteten Zeitpunkt tₑ wieder aufgefüllt wird, kann eine ununterbrochene Betriebsfähigkeit der Anlage sichergestellt werden; optional kann beispielsweise auch zum erforderlichen Zeitpunkt ein Reserve-Druckfluidvorrat zum Druckfluidvorrat 7 automatisch hinzugeschaltet werden.

Anstelle der in Fig. 2 gezeigten linearen Extrapolation kann jede beliebige andere in der Technik bekannte Extrapolationsart verwendet werden, beispielsweise eine Extrapolation unter Verwendung von Polynomen höherer Ordnung, insbesondere zweiter Ordnung, d.h. anstelle der gezeigten Sekante 21 kann z.B. eine Kurve quadratischer Ordnung eingesetzt werden.

An den Zwischenraum 6 kann ferner ein steuerbares Ablaßventil 22 angeschaltet werden, welches von der Auswerteeinrichtung 15 gesteuert wird, um das Druckfluid aus dem Zwischenraum 6 zu Testzwecken abzulassen, z.B. auf einen Fernsteuerungsbefehl von der (nicht dargestellten) Zentrale hin.

Es versteht sich, daß die Regeleinrichtung 13 und die Auswerteeinrichtung 15 auch durch entsprechende hardware- oder softwaretechnische Komponenten einer Mikroprozessorsteuerung 11 realisiert sein können, wie in der Technik bekannt.

In dem gezeigten Beispiel war nur die Fluidleitung 4 mit ihrem Doppelwand-Zwischenraum 6 mit einer Leckwarnanlage ausgestattet; es versteht sich jedoch, daß auch der Tank 2 mit seinem Doppelwand-Zwischenraum 6' mit einer gleichartigen, eigenen Leckwarnanlage ausgerüstet werden kann; oder daß - wenn mehrere Tanks und/oder Fluidleitungen vorgesehen sind - diese mit jeweils eigenen Leckwarnanlagen ausgestattet werden können; oder daß sich mehrere Leckwarnanlagen einzelne Komponenten teilen können, z.B. einen gemeinsamen Druckfluidvorrat 7, eine gemeinsame Mikroprozessorsteuerung 11, eine gemeinsame Auswerteeinrichtung 15, eine gemeinsame Alarmeinrichtung 17, eine gemeinsame Sendeeinrichtung 18 usw.; oder daß eine einzige gemeinsame Leckwarnanlage für mehrere Tanks 2 und/oder Fluidleitung(en) 4 vorgesehen wird, indem auch die jeweiligen Doppelwand-Zwischenräume 6 und 6' miteinander druckverbunden bzw. vereinigt werden.

Die Erfindung ist demgemäß nicht auf die dargestellten Ausführungsformen beschränkt, sondern umfaßt alle Varianten und Modifikationen, die in den Rahmen der angeschlossenen Ansprüche fallen.

## Patentansprüche

1. Leckwarnanlage für doppelwandige Fluidleitungen (4) oder Tanks (2), insbesondere von Tankstellen (1), mit einem Druckfluidvorrat (7) zum Beaufschlagen des Zwischenraums (6) der Doppelwand mit Druckfluid und mit einem Drucksensor (9) zum Messen des Zwischenraumdrucks (pₒ) für Leckwarnungszwecke, wobei die Leckwarnanlage einen zweiten Drucksensor (10) zum Messen des Innendrucks der Fluidleitung (4) bzw. des Tanks (2), ein steuerbares Ventil (8) zwischen Druckfluidvorrat (7) und Zwischenraum (6) sowie eine an die Drucksensoren (9, 10) angeschlossene Regeleinrichtung (13) zur Ansteuerung des Ventils (7) mit dem Regelungsziel, den Zwischenraumdruck (pₒ) um eine Mindest-Druckdifferenz (p_{diff,min}) über dem Innendruck (pᵢ) zu halten, aufweist, **dadurch gekennzeichnet, daß** die Leckwarnanlage einen dritten Drucksensor (20) zum Messen des Vorratsdrucks (pᵥ) im Druckfluidvorrat (7) und eine daran angeschlossene Auswerteeinrichtung (15) aufweist, welche aus der Abnahmerate des Vorratsdrucks (pᵥ) jenen Zeitpunkt (tₑ) extrapoliert, zu dem der Vorratsdruck (pᵥ) einen vorgegebenen Schwellwert (p_{v,min}) unterschreiten wird.

2. Leckwarnanlage nach Anspruch 1, **dadurch gekennzeichnet, daß** eine an die Drucksensoren (9, 10) angeschlossene Auswerteeinrichtung (15) vorgesehen ist, welche eine Leckwarnung ausgibt, wenn die Druckdifferenz zwischen Zwischenraumdruck (pₒ) und Innendruck (pᵢ) die Mindest-Druckdifferenz (p_{diff,min}) unterschreitet.

3. Leckwarnanlage nach Anspruch 1 oder 2, **dadurch gekennzeichnet, daß** das Ausgangssignal des zweiten Drucksensors (10), bevorzugt auch jenes des ersten Drucksensors (9), vor der Auswertung einer zeitlichen Glättung unterliegt.

4. Leckwarnanlage nach Anspruch 3, **dadurch gekennzeichnet, daß** die zeitliche Glättung eine Medianbildung über ein gleitendes Zeitfenster ist.

5. Leckwarnanlage nach einem der Ansprüche 1 bis 4, **dadurch gekennzeichnet, daß** der genannte Schwellwert (p_{v,min}) gleich der Summe aus dem maximal möglichen Innendruck (p_{i,max}) der Fluidleitung (4) und der genannten Mindest-Druckdifferenz (p_{diff,min}) ist.

6. Leckwarnanlage nach einem der Ansprüche 1 bis 5, **dadurch gekennzeichnet, daß** die genannte Mindest-Druckdifferenz (P_{diff,min}) wenigstens 1 bar ist.

7. Leckwarnanlage nach einem der Ansprüche 1 bis 6, **dadurch gekennzeichnet, daß** sie ein steuerbares Ablaßventil (22) für den Zwischenraum (6) aufweist, um daraus Druckfluid zu Testzwecken abzulassen.

8. Leckwarnanlage nach einem der Ansprüche 1 bis 7, **dadurch gekennzeichnet, daß** sie eine Sendeeinrichtung (18) zum Senden der Leckwarnung, des Extrapolationszeitpunkts und/oder ihres Funktionsstatus an eine entfernte Zentrale aufweist.

9. Leckwarnanlage nach den Ansprüchen 7 und 8, **dadurch gekennzeichnet, daß** das Ablaßventil (22) von der Zentrale fernsteuerbar ist.

10. Leckwarnanlage nach einem der Ansprüche 1 bis 9, **dadurch gekennzeichnet, daß** das Druckfluid ein Schutzgas ist, bevorzugt Stickstoff.

## Claims

1. Leakage warning installation for double-walled fluid conduits (4) or tanks (2), in particular of filling stations (1), with a pressure fluid supply (7) pressurizing the gap (6) of the double wall with pressure fluid, and with a pressure sensor (9) to measure the gap pressure (pₒ) for the purpose of leakage warnings, wherein the leakage warning installation has a second pressure sensor (10) to measure the interior pressure of the fluid conduit (4) or tank (2), a controllable valve (8) between the pressure fluid supply (7) and the gap (6) and a regulating device (13), connected to the pressure sensors (9, 10), to control the valve (7) with the regulation goal of keeping the gap pressure (pₒ) at a minimum pressure difference (p_{diff, min}) above the interior pressure (pᵢ), **characterized in that** the leakage warning installation has a third pressure sensor (20) to measure the supply pressure (pᵥ) in the pressure fluid supply (7) and an evaluation device (15) connected to it, which, from the decrease rate of the supply pressure (pᵥ), extrapolates the time (tₑ) when the supply pressure (pᵥ) will fall below a prespecified threshold value (p_{v, min}).

2. Leakage warning installation according to Claim 1, **characterized in that** an evaluation device (15), connected to the pressure sensors (9, 10), is provided, which emits a leakage warning when the pressure difference between the gap pressure (pₒ) and the interior pressure (pᵢ) falls below a minimum pressure difference (p_{diff, min}).

3. Leakage warning installation according to Claim 1 or 2, **characterized in that** the output signal of the second pressure sensor (10), preferably also that of the first pressure sensor (9), is subject to smoothing over time, before the evaluation.

4. Leakage warning installation according to Claim 3, **characterized in that** the smoothing over time is a median formation over a sliding time window.

5. Leakage warning installation according to one of Claims 1 to 4, **characterized in that** the aforementioned threshold value (p_{v, min}) is equal to the sum of the maximum possible interior pressure (p_{i, max}) of the fluid conduit (4) and the aforementioned minimum pressure difference (p_{diff, min}).

6. Leakage warning installation according to one of Claims 1 to 5, **characterized in that** the aforementioned minimum pressure difference (p_{diff, min}) is at least 1 bar.

7. Leakage warning installation according to one of Claims 1 to 6, **characterized in that** it has a controllable discharge valve (22) for the gap (6), in order to discharge pressure fluid from it for test purposes.

8. Leakage warning installation according to one of Claims 1 to 7, **characterized in that** it has a transmitting device (18) to send the leaking warning, the extrapolation time, and/or its function status to a remote central.

9. Leakage warning installation according to Claims 7 and 8, **characterized in that** the discharge valve (22) can be remote-controlled from the central location.

10. Leakage warning installation according to one of Claims 1 to 9, **characterized in that** the pressure fluid is a protective gas, preferably nitrogen.

## Revendications

1. Installation de détection de fuite pour des conduites de fluide (4) ou des réservoirs (2) à double paroi, en particulier de stations-service (1), avec un réservoir de fluide sous pression (7) pour l'alimentation en fluide sous pression de l'espace intermédiaire (6) de la double paroi et avec un capteur de pression (9) pour la mesure de la pression d'espace intermédiaire (pₒ) à des fins de détection de fuite, l'installation de détection de fuite présentant un deuxième capteur de pression (10) pour la mesure de la pression interne de la conduite de fluide (4) ou du réservoir (2), une soupape pouvant être commandée (8) entre le réservoir de fluide sous pression (7) et l'espace intermédiaire (6) ainsi qu'un dispositif de régulation (13) raccordé aux capteurs de pression (9, 10) pour la commande de la soupape (7) avec l'objectif de régulation consistant à maintenir la pression d'espace intermédiaire (pₒ) d'une différence de pression minimale (p_{diff}, ₘᵢₙ) au-dessus de la pression interne (pᵢ), **caractérisée en ce que** l'installation de détection de fuite présente un troisième capteur de pression (20) pour la mesure de la pression de réservoir (pᵥ) dans le réservoir de fluide sous pression (7) et un dispositif d'évaluation (15) raccordé à celui-ci qui extrapole de la vitesse de réduction de la pression du réservoir (pᵥ) le moment (tₑ), auquel la pression du réservoir (pᵥ) descend en dessous d'une valeur seuil prescrite (p_{v, min}).

2. Installation de détection de fuite selon la revendication 1, **caractérisée en ce qu'**un dispositif d'évaluation (15) raccordé aux capteurs de pression (9, 10) est prévu, lequel émet une détection de fuite si la différence de pression entre la pression d'espace intermédiaire (pₒ) et la pression interne (pᵢ) n'atteint pas la différence de pression minimale (p_{diff, min}).

3. Installation de détection de fuite selon la revendication 1 ou 2, **caractérisée en ce que** le signal de sortie du deuxième capteur de pression (10), de préférence aussi celui du premier capteur de pression (9), est soumis avant l'évaluation à un lissage temporel.

4. Installation de détection de fuite selon la revendication 3, **caractérisée en ce que** le lissage temporel est une formation de valeur médiane sur une fenêtre de temps glissante.

5. Installation de détection de fuite selon l'une quelconque des revendications 1 à 4, **caractérisée en ce que** la valeur seuil citée (p_{v, min}) est égale à la somme de la pression interne possible au maximum (pᵢ, ₘₐₓ) de la conduite de fluides (4) et de la différence de pression minimale citée (p_{diff, min}).

6. Installation de détection de fuite selon l'une quelconque des revendications 1 à 5, **caractérisée en ce que** la différence de pression minimale citée (p_{diff, min}) s'élève au moins à 1 bar.

7. Installation de détection de fuite selon l'une quelconque des revendications 1 à 6, **caractérisée en ce qu'**elle présente une soupape d'évacuation (22) pouvant être commandée pour l'espace intermédiaire (6) afin d'évacuer de là du fluide sous pression à des fins de test.

8. Installation de détection de fuite selon l'une quelconque des revendications 1 à 7, **caractérisée en ce qu'**elle présente un dispositif d'émission (18) pour l'envoi de la détection de fuites, du moment d'extrapolation et/ou de son statut fonctionnel à une centrale éloignée.

9. Installation de détection de fuite selon les revendications 7 et 8, **caractérisée en ce que** la soupape d'évacuation (22) peut être commandée à distance par la centrale.

10. Installation de détection de fuite selon l'une quelconque des revendications 1 à 9, **caractérisée en ce que** le fluide sous pression est un gaz protecteur, de préférence de l'azote.
